(19) Europäisches Patentamt
European Patent Office
Office européen des brevets

(11) EP 2 067 647 B1

## (12) EUROPEAN PATENT SPECIFICATION

(45) Date of publication and mention
of the grant of the patent:
**22.03.2017 Bulletin 2017/12**

(21) Application number: **07828776.0**

(22) Date of filing: **28.09.2007**

(51) Int Cl.:
*B60K 15/03* (2006.01)    *B32B 27/08* (2006.01)
*B32B 27/30* (2006.01)    *B32B 27/32* (2006.01)
*B32B 27/34* (2006.01)

(86) International application number:
**PCT/JP2007/069035**

(87) International publication number:
**WO 2008/041644 (10.04.2008 Gazette 2008/15)**

(54) **FUEL TANK**

KRAFTSTOFFBEHÄLTER

RÉSERVOIR DE CARBURANT

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **29.09.2006   JP 2006269879
21.02.2007   JP 2007041431**

(43) Date of publication of application:
**10.06.2009   Bulletin 2009/24**

(73) Proprietor: **Daikin Industries, Ltd.
Osaka 530-8323 (JP)**

(72) Inventors:
• **INABA, Takeshi
Settsu-shi, Osaka 566-8585 (JP)**
• **SAGISAKA, Shigehito
Settsu-shi, Osaka 566-8585 (JP)**

(74) Representative: **Hoffmann Eitle
Patent- und Rechtsanwälte PartmbB
Arabellastraße 30
81925 München (DE)**

(56) References cited:
EP-A1- 1 086 962    WO-A1-2005/061222
JP-A- 05 008 353    JP-A- 08 091 060
JP-A- 11 334 390    JP-A- 2000 229 522
JP-A- 2004 500 504    US-A- 5 170 011
US-A- 5 928 745    US-A- 6 090 459

• DATABASE WPI Week 199624 Thomson
Scientific, London, GB; AN 1996-235024
XP002665464, & JP 8 091060 A (SUMITOMO
ELECTRIC IND CO) 9 April 1996 (1996-04-09)
• DATABASE WPI Week 199308 Thomson
Scientific, London, GB; AN 1993-061386
XP002665465, & JP 5 008353 A (TOKAI RUBBER
IND LTD) 19 January 1993 (1993-01-19)

**Description**

TECHNICAL FIELD

The present invention relates to a fuel tank.

BACKGROUND ART

When there is a vacant space above the fuel level in a fuel tank, the space is filled with the fuel vapor. On the occasion of refueling, the fuel vapor is generally discharged from the fuel tank into the atmosphere with the rise in fuel level. Therefore, a variable capacity tank (bladder tank) equipped with a liner or bladder (reservoir) made of a flexible material is known for the purpose of reducing the volume of the upper space in a fuel tank. In such variable capacity tank, the internal volume of the fuel chamber varies according to the volume of the fuel and, therefore, there is no vacant space above the fuel level in the fuel chamber and, accordingly, the discharge of the evaporated fuel into the atmosphere can be reduced.

Japanese Kokai Publication H06-64094 describes, as a variable capacity tank, a multilayer laminated product characterized in that it comprises a gas-tight metal foil laminated with a fluoropolymer-clad polyimide film. However, this product is a metal foil-based laminate and therefore is difficult to recycle.

Japanese Kokai Publication 2000-229522 describes a fuel tank equipped with a capacity-compensating part for varying the capacity according to the extent of fuel filling in the fuel tank. However, this document contains no discussion about the material to be used although it describes the structure of the fuel tank.

US 5,928,745 discloses a thermoplastic fuel tank or container having a vapor barrier comprising a composition including a cyclodextrin that is chemically modified with substituent which increase the compatibility of the cyclodextrin material in the contained. The cyclodextrin in the fule tank walls serves to complex or entrap fuel vapor permeating through the tank material, thus preventing it to be liberated to the environment.

DISCLOSURE OF INVENTION

PROBLEMS WHICH THE INVENTION IS TO SOLVE

It is an object of the present invention to provide a fuel tank excellent in moldability, chemical resistance and low fuel permeability and excellent also in recyclability.

MEANS FOR SOLVING THE PROBLEMS

The present invention relates to a fuel tank comprising a main body and, placed within the main body and capable of changing the internal volume according to the volume of the fuel, a bag-like fuel reservoir having a multilayer structure comprising

(i) a polyolefin resin/modified polyolefin resin/fluororesin (outer surface layer/intermediate layer/inner surface layer) structure,
(ii) a polyolefin resin/modified polyolefin resin/polyamide resin/fluororesin (outermost surface layer/outer layer/inner layer/innermost surface layer) structure, or
(iii) a polyamide resin/fluororesin (outer surface layer/inner surface layer) structure,

wherein the fluororesin contains an adhesive functional group selected from an amide, carbamoyl, hydroxyl, carboxyl, carbonate and carboxylic acid halide group.

In the following, the invention is described in detail.

The present invention is a fuel tank comprising a main body and a bag-like fuel reservoir placed within the main body and capable of changing a internal volume according to a volume of the fuel, wherein the fuel reservoir has a multilayer structure as described above.

As compared with those fuel tanks formed by using the conventional general-purpose plastics or elastomers, the fuel tank of the invention is superior in chemical resistance and low fuel permeability and, for example, can show sufficient levels of chemical resistance and low fuel permeability even against alcohols such as ethanol and soybean oil- and/or rapeseed oil-based bio-diesel fuels, which are expected to serve as next-generation biofuels; it is sufficiently resistant to changes in temperature and can maintain its flexibility and impact resistance for a long period of time. Furthermore, it can secure sufficiently low fuel permeability without lamination of a metal foil, and it can be recycled with ease since the tank main body and the fuel reservoir can readily be separated.

In accordance with the invention, the above-mentioned fuel reservoir is one having a bag-like shape and having flexibility (the so-called bladder container) and, therefore, the capacity thereof can generally change according to the volume of the fuel poured thereinto. The size of the fuel reservoir can be properly selected according to the size of the tank main body; it is not particularly restricted but, generally, the maximum capacity thereof may amount to 1-150 liters.

The fuel reservoir mentioned above has a multilayer structure comprising

(i) a polyolefin resin/modified polyolefin resin/fluororesin (outer surface layer/intermediate layer/inner surface layer) structure,

(ii) a polyolefin resin/modified polyolefin resin/polyamide resin/fluororesin (outermost surface layer/outer layer/inner layer/innermost surface layer) structure, or

(iii) a polyamide resin/fluororesin (outer surface layer/inner surface layer) structure,

When it has a multilayer structure, high mechanical strength and low production cost can favorably be realized.

In a practice of the invention, the fluororesin constituting the fluororesin layer mentioned above is a homopolymer or copolymer comprising repeating units derived from at least one fluorinated ethylenic monomer.

The above-mentioned fluororesin may be one obtained by polymerization on a fluorinated ethylenic monomer(s) alone or one obtained by polymerization of a fluorinated ethylenic monomer(s) and an ethylenic monomer(s) containing no fluorine atom.

In the practice of the invention, the fluororesin layer may comprise only one fluororesin species or two or more fluororesin species.

The fluorinated ethylenic monomer mentioned above is not particularly restricted but may be any of fluorine atom-containing olefinically unsaturated monomers, for example tetrafluoroethylene [TFE], vinylidene fluoride, chlorotrifluoroethylene [CTFE], vinyl fluoride, hexafluoropropylene [HFP], hexafluoroisobutene, a monomer represented by the formula (i):

$$CH_2=CX^1(CF_2)_nX^2 \qquad (i)$$

(wherein $X^1$ is H or F, $X^2$ is H, F or Cl and n is an integer of 1 to 10), perfluoro(alkyl vinyl ethers), among others.

The fluorine atom-free ethylenic monomer mentioned above is preferably selected from among ethylenic monomers containing not more than 5 carbon atoms from the viewpoint of retaining heat resistance and chemical resistance, among others. As such monomer, there may be mentioned, for example, ethylene, propylene, 1-butene, 2-butene, vinyl chloride and vinylidene chloride.

When the above fluororesin is produced by using a fluorinated ethylenic monomer(s) and a fluorine atom-free ethylenic monomer(s), the monomer composition thereof may be such that amount of the fluorinated ethylenic monomer(s) accounts for 10-100 mol-% (preferably 30-100 mol-%) and that of the fluorine atom-free ethylenic monomer(s) for 090 mol-% (preferably 0-70 mol-%).

As the fluororesin to be used in a practice of the invention, there may be mentioned chlorotrifluoroethylene [CTFE]-based polymers, tetrafluoroethylene/hexafluoropropylene [FEP]-based copolymers, tetrafluoroethylene/perfluoro(alkyl vinyl ether) [PFA]-based copolymers, ethylene/tetrafluoroethylene [ETFE]-based copolymers, ethylene/tetrafluoroethylene/hexafluoropropylene [EFEP]-based copolymers, and poly(vinylidene fluoride) [PVdF]-based polymers, among others.

The above-mentioned fluororesin is preferably a perhalopolymer. By using a perhalopolymer, it becomes possible to further improve the chemical resistance and the low fuel permeability. The perhalopolymer is a polymer in which halogen atoms are bound to all carbon atoms constituting the main chain of the polymer.

The above-mentioned fluororesin is more preferably a CTFE-based polymer, a FEP-based copolymer or a PFA-based copolymer, still more preferably a CTFE-based polymer or a FEP-based copolymer from the viewpoint of the flexibility and the low fuel permeability.

These preferred fluororesins are excellent in resistance to permeation of a mixed fuel such as an alcoholic fuel and therefore can give a fuel tank having sufficient levels of low fuel permeability.

As the CTFE-based polymers, there may be mentioned, for example, polychlorotrifluoroethylene [PCTFE] and CTFE-based copolymers.

Preferred as the CTFE-based copolymers are those whose constituent elements are CTFE units, TFE units and monomer [α] units derived from a monomer [α] copolymerizable with CTFE and TFE and in which the sum of the CTFE units and TFE units amounts to 90-99.9 mol-% and the monomer [α] units amount to 0.1-10 mol-% . When the monomer [α] unit content is lower than 0.1 mol-%, the moldability, environmental stress cracking resistance and environmental cracking resistance for fuel tend to become poor and, when it is above 10 mol-%, a low fuel permeability, heat resistance and mechanical characteristics tend to become inferior.

When the monomer [α] is a PAVE, a more preferred lower limit to the monomer [α] unit content is 0.5 mol-% and a more preferred upper limit thereto is 5 mol-%.

The ratio between the CTFE units and TFE units in the CTFE-based copolymers mentioned above is such that the CTFE units amount to 15-90 mol-% and the TFE units to 85-10 mol-%, more preferably the CTFE units amount to 20-90 mol-% and the TFE units to 80-10 mol-%.

The "CTFE unit" and "TFE unit" so referred to herein are respectively a CTFE-derived moiety [-CFCl-CF$_2$-] and a TFE-derived moiety [-CF$_2$-CF$_2$-] in the molecular structure of the CTFE copolymer and, similarly, the "monomer [α] unit" is a moiety resulting from addition of the monomer [α] in the molecular structure of the CTFE-based copolymer.

The monomer unit content, for example the CTFE unit content, so referred to herein, is a value obtained by carrying out $^{19}$F-NMR analysis.

The above-mentioned monomer [α] is not particularly restricted but may be any of those monomers copolymerizable with CTFE and TFE; thus, there may be mentioned, for example, ethylene [Et], vinylidene fluoride [VdF], perfluoro(alkyl vinyl ether) [PAVE] represented by CF$_2$=CF-ORf$^1$ (in which Rf$^1$ is C$_{1-8}$-perfluoroalkyl), a vinyl monomer represented by CX$^3$X$^4$=CX$^5$(CF$_2$)$_n$X$^6$ (wherein X$^3$, X$^4$ and X$^5$ each independently are H or F, X$^6$ is H, F or Cl and n is an integer of 1-10) and alkyl perfluorovinyl ether derivates represented by CF$_2$=CF-OCH$_2$-Rf$^2$ (wherein Rf$^2$ is C$_{1-5}$-perfluoroalkyl), among others.

Preferred examples of the above-mentioned PAVE are perfluoro(methyl vinyl ether) [PMVE], perfluoro(ethyl vinyl ether) [PEVE], perfluoro (propyl vinyl ether) [PPVE], and perfluoro (butyl vinyl ether) ; and among them, PMVE, PEVE or PPVE is more preferred.

Preferred as the above-mentioned alkyl perfluorovinyl ether derivative are those wherein Rf$^2$ is C$_{1-3}$-perfluoroalkyl, and CF$_2$=CF-OCH$_2$-CF$_2$CF$_3$ is more preferred.

Further, The above-mentioned monomer [α] may be an unsaturated carboxylic acid copolymerizable with CTFE and TFE as described in International Publication WO 2005/100420.

The above-mentioned unsaturated carboxylic acid is preferably one having at least one carbon-carbon unsaturated bond enabling copolymerization (hereinafter referred to also as "copolymerizable carbon-carbon unsaturated bond") in each molecule and having at least one carbonyloxy group [-C(=O)-O-] in each molecule.

The unsaturated aliphatic carboxylic acid may be an unsaturated aliphatic monocarboxylic acid or an unsaturated aliphatic polycarboxylic acid containing two or more carboxyl groups and includes, among others, (meth) acrylic acid, crotonic acid, maleic acid, fumaric acid, itaconic acid, citraconic acid, mesaconic acid, aconitic acid and like unsaturated aliphatic carboxylic acids containing 3-6 carbon atoms. The unsaturated aliphatic carboxylic acid may also be an unsaturated aliphatic polycarboxylic acid containing 3-6 carbon atoms. The unsaturated aliphatic polycarboxylic acid is not particularly restricted but includes, among others, maleic acid, fumaric acid, itaconic acid, citraconic acid, mesaconic acid and aconitic acid; it may also be the acid anhydride of maleic acid, itaconic acid or citraconic acid.

The monomer [α] may also be an unsaturated compound represented by the general formula:

$$CX^7_2=CY^1-(Rf^3)_n-Z^1$$

wherein Z$^1$ is an adhesive functional group, which is to be described later herein, X$^7$ and Y$^1$ each independently are H or F, Rf$^3$ is C$_{1-40}$-alkylene, fluorinated C$_{1-40}$-oxyalkylene, an ether bond-containing fluorinated C$_{1-40}$-alkylene group or an ether bond-containing fluorinated C$_{1-40}$-oxyalkylene group and n is 0 or 1.

The above-mentioned FEP-based copolymer preferably has a TFE unit content of 99-80 mol-% and an HFP unit content of 2-20 mol-%.

The above-mentioned FEP-based copolymer may comprise, in addition to the TFE units and HFP units, monomer [α$^1$] units derived from a monomer [α$^1$] copolymerizable with TFE and HFP.

The above-mentioned monomer [α$^1$] is not particularly restricted but may be any of compounds copolymerizable with TFE and HFP, including those compounds enumerated hereinabove referring to the monomer [α].

When it contains monomer [α$^1$] units, the above-mentioned FEP-based copolymer is preferably one having a total content of CTFE and TFE units of 90-99.9 mol-% and a monomer [α$^1$] unit content of 0.1-10 mol-% since such one is excellent in flexibility and low fuel permeability.

In a practice of the invention, the above-mentioned fluororesin containing an adhesive functional group can provide a fuel tank excellent in impact resistance and strength since the adhesiveness thereof to the thermoplastic resin layer is then improved.

As the adhesive functional group, there may be mentioned, for example, a carbonyl group, a hydroxyl group and an amino group, among others.

The "carbonyl group" so referred to herein is a carbon-derived divalent group comprising a carbon-oxygen double bond, typically the group represented by -C(=O)-. The carbonyl group is not particularly restricted but may be a moiety of such a chemical structure as a carbonate group, a carboxylic acid halide group (haloformyl group), a formyl group, a carboxyl group, a carbonyloxy bond [-C(=O)O-], an acid anhydride bond [-C(=O)O-C(=O)-], an isocyanato group, an amido group, an imido group [-C(=O)-NH-C(=O)-], an urethane bond [-NH-C(=O)O-], a carbamoyl group [$NH_2$-C(=O)-], a carbamoyloxy group [$NH_2$-C(=O)O-], an ureido group [$NH_2$-C(=O)-NH-] or an oxamoyl group [$NH_2$-C(=O)-C(=O)-], for instance.

At least one hydrogen atom bound to the nitrogen atom of an amido group, imido group, urethane bond, carbamoyl group, carbamoyloxy group, ureido group or oxamoyl group, for instance, may be substituted by a hydrocarbon group such as an alkyl group.

The above-mentioned adhesive functional group is selected from amide, carbamoyl, hydroxyl, carboxyl, carbonate, and carboxylic acid halide groups since these are easy to introduce and the resins obtained show proper heat resistance and good adhesiveness at relatively low temperature; in particular, those carbonate group and/or carboxylic acid halide group-containing ones which are described in WO 99/45044 are preferred among others.

The number of adhesive functional groups which the above-mentioned fluororesin has can be appropriately selected according to a counterpart species to be used for lamination, the shape, the purpose of adhesion, the intended use, the adhesion strength required, the fluororesin species and the method of bonding and other differences. Preferably, however, the number of adhesive functional groups is 3-1000 per 1 x $10^6$ main chain carbon atom in the polymer constituting the fluororesin.

The fluororesin to be used in a practice of the invention contains an adhesive functional group, and it may comprise a polymer whose main chain is an adhesive functional group-terminated one or which has such group or groups on a side chain or chains, or may comprise a polymer whose main chain is an adhesive functional group-terminated one and which further has such group or groups on a side chain or chains. When the main chain thereof is an adhesive functional group-terminated one, the fluororesin may have such groups on both ends of the main chain or may have such a group only on either of the ends thereof. When the adhesive functional group is an ether bond-containing one, one or more such adhesive functional groups may occur in the main chain.

The above-mentioned fluororesin is preferably one comprising a polymer whose main chain is an adhesive functional group-terminated one, since such fluororesin will not markedly reduce a mechanical characteristics or chemical resistance or it is advantageous from a productivity and cost points of view.

As for the method of adhesive functional group introduction, a monomer or monomers containing such a functional group as mentioned above may be introduced into the polymer by copolymerization or such a group may be introduced in the form of a polymerization initiator.

In a practice of the invention, the above-mentioned fluororesin preferably has a melting point of 160-270°C, although this range has no limitative meaning.

The molecular weight of the above-mentioned fluororesin is preferably within such a range that the mechanical characteristics, low fuel permeability and other characteristics required of the product fuel tank can be realized. When, for example, the melt flow rate [MFR] is employed as an indicator of the molecular weight, it is preferred that the MFR at an any temperature within the range of about 230-350°C, which is a molding temperature range for fluororesins in general, be 0.5-100 g/10 minutes.

The melting point of each resin as shown herein is a value determined as the temperature corresponding to the maximum value on a heat-of-fusion curve as measured using a DSC apparatus (product of Seiko) at a programming rate of 10°C/minute, and the MFR is a value determined by measuring the weight (g) of the polymer flowing out from a nozzle with a diameter of 2 mm and a length of 8 mm at each temperature and under a load of 5 kg during a unit time (10 minutes) using a melt indexer (product of Toyo Seiki Seisakusho).

The above-mentioned fluororesin can be obtained by any of the conventional polymerization methods known in the art, for example by suspension polymerization, solution polymerization, emulsion polymerization or bulk polymerization. In the polymerization mentioned above, the temperature, pressure and other conditions, the polymerization initiator and another additive or additives can be appropriately selected according to the composition and amount of the desired fluororesin.

The fluororesin layer may have a surface subjected to adhesive surface treatment for the purpose of improving the interlaminar bonding and of improving the shock resistance and strength of the product fuel tank.

The adhesive surface treatment to be carried out in a practice of the invention is not particularly restricted but there may be mentioned, for example, such known technologies as etching treatment, plasma treatment, corona treatment and photochemical treatment.

The above adhesive surface treatment can be carried out under conditions properly selected according to the composition of the fluororesin employed and other factors.

In a practice of the invention, a thermoplastic resin constituting a thermoplastic resin layer may be a fluorine-containing one provided that it is a polymer showing plasticity upon heating; preferably, however, it is a fluorine-free one.

As the thermoplastic resin the present multilayer structure comprises polyolefin resins, polyamide resins and/modified polyolefin resins. Also, there may be mentioned, for example, polyvinyl resins, polyesters, ethylene/vinyl alcohol copolymers, polyacetal resins, polyurethane resins, polyphenylene oxide resins, polycarbonate resins, acrylic resins, styrenic resins, acrylonitrile/butadiene/styrene [ABS] resins, vinyl chloride-based resins, cellulosic resins, polyetheretherketone [PEEK] resins, polysulfone resins, polyethersulfone [PES] resins, polyetherimide resins and polyphenylene sulfide resins. Among them, the polyolefin resins, polyamide resins and modified polyolefin resins are preferred in view of their flexibility, adhesiveness and moldability, among others. Ethylene/vinyl alcohol resins are preferred from the adhesiveness and low fuel permeability points of view.

As the polyolefin resins, there may be mentioned propylene homopolymers, propylene-ethylene block copolymers, low-density polyethylene, medium-density polyethylene, high-density polyethylene and ultrahigh-density polyethylene, among others.

As the modified polyolefin resins, there may be mentioned, for example, maleic acid modifications, epoxy modifications or amine ($NH_2$) modifications of propylene homopolymers, propylene-ethylene block copolymers, low-density polyethylene, medium-density polyethylene, high-density polyethylene, and ultrahigh-density polyethylene.

The polyamide resins mentioned above each comprises a polymer having an amide bond [-NH-C(=O)-] as a repeating unit within the molecule.

Such polyamide resin may be a so-called nylon resin comprising a polymer resulting from bonding of each intramolecular amide bond to an aliphatic and/or an alicyclic structure(s) or a so-called aramid resin comprising a polymer resulting from bonding of each intramolecular amide bond to aromatic structures.

The above-mentioned nylon resin is not particularly restricted but includes, among others, those comprising such a polymer as nylon 6, nylon 66, nylon 11, nylon 12, nylon 610, nylon 612, nylon 6/66, nylon 66/12, nylon 46 or a metaxylylenediamine/adipic acid copolymer. Two or more of these may also be used in combination.

The polyamide resin may also comprise a polymer whose molecule partly contains a structure having no amide bond as the repeating unit and resulting from block copolymerization or graft copolymerization.

As such a polyamide resin, there may be mentioned, for example, those comprising a nylon 6/polyester copolymer, a nylon 6/polyether copolymer, a nylon 12/polyester copolymer, or a nylon 12/polyether copolymer.

These polyamide elastomers are the ones obtained by block copolymerization of nylon oligomers with polyester oligomers via carbonyloxy bonding or the ones obtained by block copolymerization of nylon oligomers with polyether oligomers via ether bonding. As the polyester oligomers, there may be mentioned, for example, polycaprolactone and polyethylene adipate oligomers; as the polyether oligomers, there may be mentioned, for example, polyethylene glycol, polypropylene glycol and polytetramethylene glycol oligomers. Preferred as the polyamide elastomers are nylon 6/polytetramethylene glycol copolymers and nylon 12/polytetramethylene glycol copolymers.

The amine value of the polyamide resin mentioned above may be 10-60 (equivalents/$10^6$ g). A preferred lower limit thereto may be 15 (equivalents/$10^6$ g), a preferred upper limit thereto may be 50 (equivalents/$10^6$ g) and a more preferred upper limit may be 35 (equivalents/$10^6$ g).

The "amine value" so referred to herein is a value determined by dissolving 1 g of the polyamide resin in 50 ml of m-cresol with heating and titrating the solution with a 1/10 N aqueous solution of p-toluenesulfonic acid with thymol blue as the indicator and, unless otherwise specified, it means the amine value of the polyamide resin prior to lamination.

The above-mentioned ethylene/vinyl alcohol resin is the one obtained by hydrolyzing of an ethylene/vinyl acetate copolymer obtained from ethylene and vinyl acetate.

A mixing ratio between ethylene and vinyl acetate to be copolymerized is appropriately selected according to the number of moles of vinyl acetate units as defined by a formula given later herein.

Preferred as the above-mentioned ethylene/vinyl alcohol resin are those satisfying a relation X x Y/100 ≥ 7, wherein X is the vinyl acetate unit mole percent and Y is the percent degree of hydrolysis.

When X x Y/100 < 7, the interlaminar bonding strength may sometimes be insufficient. The relation X x Y/100 ≥ 10 is more preferred.

The above-mentioned X x Y/100 value serves as an indicator of the content of hydroxyl group which the above-mentioned ethylene/vinyl alcohol resin has. That the value of X x Y/100 is high means that the content of the hydroxyl group which the above ethylene/vinyl alcohol resin has is high.

The hydroxyl groups are groups capable of participating in the adhesion of the ethylene/vinyl alcohol resin layer and the lamination counterpart material, when the hydroxyl group content is high, the interlaminar adhesion is improved. The term "lamination counterpart material" as used herein refers to a material involved in lamination in contact with the relevant layer.

The "vinyl acetate unit mole percent X" so referred to herein is the proportion of the number [$N_i$] of moles of vinyl acetate from which the vinyl acetate units are derived relative to the total number [N] of moles of ethylene and vinyl acetate as added in each molecule of the above-mentioned ethylene/vinyl alcohol resin and means the mean value of the mole contents $X_i$ represented by the formula:

$$X_i \ (\%) \ = \ (N_i/N) \ x \ 100.$$

The above-mentioned vinyl acetate unit mole percent X is the value obtained by infrared absorption spectrometry [IR] measurement.

The term "vinyl acetate unit" as used herein means a vinyl acetate-derived moiety constituting a part of the molecular structure of the above-mentioned ethylene/vinyl alcohol resin. The vinyl acetate unit may have hydroxyl group as a result of hydrolysis thereof or have an acetoxy group in the unhydrolyzed state.

The "degree of hydrolysis" mentioned above is the proportion, in percentage, of the number of hydrolyzed vinyl acetate units to the sum of the number of hydrolyzed vinyl acetate units and the number of unhydrolyzed vinyl acetate units. The degree of hydrolysis is the value obtained by infrared absorption spectrometry [IR] measurement.

As commercial products which fall under the category of the above-mentioned ethylene/vinyl alcohol resin and satisfying the above-mentioned relation between X and Y, there may be mentioned, for example, Eval F101 (product of Kuraray Co., Ltd., vinyl acetate unit X = 68.0 mol-%; degree of hydrolysis Y = 95%; X x Y/100 = 64.6), Melthene H6051 (product of Tosoh Corporation, vinyl acetate unit X = 11.2 mol-%; degree of hydrolysis Y = 100%; X x Y/100 = 11.2) and Technolink K200 (product of Taoka Chemical Co., Ltd., vinyl acetate unit X = 11.2 mol-%; degree of hydrolysis Y = 85%; X x Y/100 = 9.52).

The above-mentioned ethylene/vinyl alcohol resin preferably has an MFR, at 200°C, of 0.5-100 g/10 minutes.

When the above-mentioned MFR is either lower than 0.5 g/10 minutes or in excess of 100 g/10 minutes, the difference between a melt viscosity of the ethylene/vinyl alcohol resin and a melt viscosity of the counterpart fluororesin becomes large, unfavorably causing an uneven thickness distribution in each layer. A preferred lower limit is 1 g/10 minutes, and a preferred upper limit is 50 g/10 minutes.

The above-mentioned thermoplastic resin layer may comprise only one of the above-mentioned thermoplastic resins or two or more of them.

In a practice of the invention, the thermoplastic resin preferably has a melting point of 100-270°C.

The fluororesin layer and/or thermoplastic resin layer mentioned above may further contain one or more of various fillers such as inorganic powders, glass fibers and metal oxides each incorporated therein at an addition level not causing any impairment in performance characteristics according to the purpose and/or intended use and, further, may contain, in addition to a filler or fillers, one or more of heat stabilizers, reinforcing agents, ultraviolet absorbers, pigments and other any additives as incorporated therein.

As the additives mentioned above, there may be added, for example, montmorillonite, beidellite, saponite, nontronite, hectorite, sauconite, stevensite and like lamellar smectite clay minerals as well as microlamellar minerals having a high aspect ratio, for example mica species, for reducing the levels of permeation of a fuel. Further, for the purpose of imparting flexibility, any of various rubbers may also be added.

As such an additive as mentioned above, there may be added, for example, an electrically conductive filler for imparting electric conductivity. The electrically conductive filler is not particularly restricted but may be, for example, a powder or fibrous form of a conductive simple substance, such as a metal or carbon; a powder form of a conductive compound such as zinc oxide; or a powder provided with electric conductivity by surface treatment.

The powder- or fibrous-form conductive simple substance is not particularly restricted but includes, among others, metal powders such as copper and nickel powders; metal fibers such as iron and stainless steel fibers; carbon black, carbon fibers, and carbon fibrils described in Japanese Kokai Publication H03-174018 and elsewhere.

The powder provided with electric conductivity by surface treatment is a powder derived from glass beads or such a nonconductive powder as a titanium oxide powder by surface treatment for rendering the surface thereof electrically conductive.

The method of treatment for rendering the surface conductive is not particularly restricted but includes, among others, metal sputtering and nonelectrolytic plating. Among the conductive fillers mentioned above, carbon black is suitably used since it is advantageous from a economical viewpoint and from a electrostatic charge accumulation prevention viewpoint. When the conductive filler is incorporated, it is preferred that pellets be prepared in advance by melting and kneading the resin with the filler.

The conductive resin composition with the filler incorporated therein preferably has a volume resistivity of $1 \times 10^0$ to $1 \times 10^9$ Ω·cm. A more preferred lower limit is $1 \times 10^2$ Ω·cm and a more preferred upper limit is $1 \times 10^8$ Ω·cm.

In the case of providing electric conductivity, the innermost layer-forming fluororesin to come into contact with a fuel may alone be provided with electric conductivity. In this case, the fluororesin layer may also be provided with a conductive fluororesin layer as a further inner layer relative thereto.

The laminate structure of the present fuel reservoir comprises a polyolefin resin/modified polyolefin resin/fluororesin (outer surface layer/intermediate layer/inner surface layer) structure, a polyolefin resin/modified polyolefin resin/polyamide resin/fluororesin (outermost surface layer/outer layer/inner layer/innermost surface layer) structure, or a polyamide resin/fluororesin (outer surface layer/inner surface layer) structure. By providing a modified polyolefin layer as an intermediate layer, it becomes possible to increase the adhesion between the fluororesin and polyolefin resin. For further increasing the low fuel permeability, it is also possible to provide an ethylene/vinyl alcohol resin layer as an intermediate layer.

As more preferred layer constitution examples of the laminate structure of the fuel reservoir, which are not particularly restricted, there may be mentioned, for example, such constitutions as polyethylene resin/modified polyethylene resin/fluororesin, polyethylene resin/modified polyethylene resin/polyamide resin/fluororesin, polyamide resin/fluororesin, polyethylene resin/modified polyethylene resin/ethylene-vinyl alcohol resin/polyamide resin/fluororesin, fluororesin/modified polyethylene resin/fluororesin, fluororesin/polyamide resin/modified polyethylene resin/polyamide resin/fluororesin, and fluororesin/polyamide resin/ethylene-vinyl alcohol resin/polyamide resin/fluororesin.

Among those laminate structures mentioned above, the fluororesin layer preferably comprises a CTFE-based copolymer or a FEP-based copolymer.

In addition to the layers mentioned above, a recycle layer may further be incorporated using pellets obtained by melting and kneading, on a twin-screw extruder or short screw extruder, waste resin materials caused on the occasion of producing such multilayer films as mentioned above or processing them into bag forms and/or resins separated from recovered multilayer films for recycling.

The fluororesin mentioned above preferably has a fuel permeability coefficient of $\leq 10$ g/m$^2$/day, more preferably $\leq 1.5$ g·mm/m$^2$/day, still more preferably $\leq 1.0$ g·mm/m$^2$/day, particularly preferably $\leq 0.4$ g.mm/m$^2$/day. The fuel tank of the invention in which the fluororesin constituting the fuel reservoir has a fuel permeability coefficient within the above range can have a high level of low fuel permeability.

The "fuel permeability coefficient" so referred to herein is the greater of the two values calculated from the changes in mass as measured at 60°C for the films obtained from the resin to be measured and respectively placed in fuel permeability coefficient measurement cups containing an isooctane/toluene/ethanol mixed solvent (hereinafter referred to as CE10) prepared by mixing isooctane, toluene and ethanol together in a volume ratio of 45:45:10 or a mixed solvent (hereinafter referred to as CE85) prepared by mixing them together in a volume ratio of 7.5:7.5:85.

As regards the rate of fuel permeation through the fuel reservoir mentioned above, a lower limit thereto may be set, for example, at 0.05 g/m$^2$/day. A more preferred upper limit to the fuel permeation rate is 5 g/m$^2$/day and a more preferred upper limit thereto is 2.5 g/m$^2$/day.

In the present specification, the above-mentioned rate of fuel permeation is the mass of a fuel permeating through the whole fuel reservoir per unit time (day) per unit inner surface area and is the value obtained by measuring the permeation level at 60°C using CE10 or CE85.

As the method of extruding the above-mentioned fluororesin and thermoplastic resin in the case of the fuel reservoir having a multilayer structure, there may be mentioned, for example, (1) the method comprising coextruding the resins in molten state to cause interlaminar thermal fusion bonding (fusion bonding) and thereby form a laminate having a multilayer structure in one step (coextrusion), (2) the method comprising placing films separately prepared on the respective extruders one on top of another and causing interlaminar adhesion by thermal fusion bonding, (3) the method comprising extruding a molten resin onto the surface of a film prepared in advance to form a laminate, and (4) the method comprising applying, onto the surface of a film prepared in advance, a polymer to constitute the layer neighboring that film in the manner of electrostatic coating and then heating the coated film obtained wholly or from the coated side to heat and melt the polymer subjected to coating for layer formation.

When the resins constituting the fuel reservoir mentioned above are coextrudable, the above-mentioned coextrusion method (1) is generally employed for extrusion. As the coextrusion techniques, there may be mentioned the multimanifold technique, feed block technique, multilayer blowing technique, multilayer inflation -technique and other multilayer coextrusion technique known in the art.

In the case of the extrusion methods (2) and (3) mentioned above, the surface of each film after formation which is to come into contact with another film may be subjected to surface treatment for the purpose of enhancing the interlaminar adhesion. As such surface treatment, there may be mentioned etching treatment such as sodium etching treatment; corona treatment; and plasma treatment such as low temperature plasma treatment, among others. Plasma treatment is preferred, however. The plasma treatment can be carried out, for example, in an atmosphere of Ar, He, H$_2$, O$_2$, N$_2$, NH$_3$ or a hydrocarbon gas, or a mixed gas composed of these. When a film is subjected to such surface treatment, a sufficient level of bond strength can be obtained even when the fluororesin contains no adhesive functional group.

Preferred as the extrusion method are the above-mentioned method (1) and methods (2) and (3) in which the lamination is preceded by surface treatment; from the production efficiency viewpoint, the method (1) is most preferred.

The fuel reservoir mentioned above can be obtained by joining single layer fluororesin films or the laminated sheets as obtained by the extrusion method mentioned above utilizing an adhesive known in the art to form a bag-like shape. For example, an adhesive is applied to sites to be joined together, the sites are pushed against each other, and the adhesive is caused to cure at least partially. Then, the whole is allowed to stand in an environment maintained at 135 to 150°C and the joint is then cooled under pressure. A period of 5 to 8 days is required for complete cure of this joint at room temperature.

The fuel reservoir mentioned above can also be obtained by forming a bag-like shape by the technique of heat sealing. Specifically, two films are placed one on top of the other, preferably in a manner such that the fluororesin layers come into contact with each other, and heat sealing is carried out. It is necessary from the film-to-film seal strength viewpoint that the heat sealing temperature be not lower than the melting point of the resin to be adhered and not higher than the thermal decomposition temperature of the resin to be adhered and of the thermoplastic resin involved in the lamination. The heat sealing method is preferred since the seal is not affected by adhesive-due deterioration.

The fuel reservoir mentioned above can be formed in such a simple step, hence is superior in productivity.

It is also preferred that the fuel reservoir has a bag-like shape conforming to the inner shape of the fuel tank main body; for example, such a bag-like molded article can be formed by the blowing method using a mold and it is also possible to obtain the fuel tank main body and bag-shaped fuel reservoir simultaneously by molding the tank main body and fuel reservoir simultaneously by the multilayer blow molding technique.

The fuel reservoir mentioned above preferably may have a wall thickness of $\geq 50\ \mu m$, preferably $\geq 100\ \mu m$. Provided that it is within the above range, the wall thickness may be $\leq 500\ \mu m$, preferably $\leq 350\ \mu m$. An excessively small wall thickness may possibly bring about insufficient low fuel permeability and/or mechanical strength, while an excessively great wall thickness may possibly bring about insufficient flexibility.

The wall thickness of the fuel reservoir, so referred to herein, indicates the sum of the respective layers when the reservoir has a multilayer structure.

The fluororesin layer in the fuel reservoir mentioned above preferably has a thickness of 50-500 $\mu m$ and the thermoplastic resin layer preferably has a thickness of $\leq 450\ \mu m$.

Even on the occasion of scrapping of the above-mentioned fuel reservoir, which has a multilayer structure, the fluororesin alone can be extracted, for recycling, from the fuel reservoir by degrading and dissolving the fluorine-free thermoplastic resin by an appropriate combination of high-temperature treatment, high-pressure treatment and other treatments in the presence of steam or a solvent. In this respect, the fuel tank of the invention is superior in recyclability as well.

In the fuel tank of the invention, the shape and capacity of the fuel tank main body for housing the fuel reservoir mentioned above is not particularly restricted but can be properly selected according, among others, to the required fuel volume and the kind of the vehicle on which the tank is to be mounted. The material for forming the fuel tank main body is not particularly restricted provided that required levels of strength and rigidness can be obtained; for example, a metal or a plastic can be used. The use of a plastic is more preferred from the viewpoint of reduction in vehicle weight. The plastic is not particularly restricted but includes, among others, ethylene/vinyl alcohol resins, polyolefin resins, polyamide resins, modified polyolefin resins, polyvinyl resins, polyester resins, polyaramid resins, polyimide resins, polyamideimide resins, polyacetal resins, polyurethane resins, polyphenylene oxide resins, polycarbonate resins, acrylic resins, styrenic resins, acrylonitrile/butadiene/styrene [ABS] resins, vinyl chloride-based resins, cellulosic resins, polyetheretherketone [PEEK] resins, polysulfone resins, polyethersulfone [PES] resins, polyetherimide resins, polyphenylene sulfide resins and fluororesins; among them, polyolefin resins and polyamide resins are preferred from the flexibility, adhesiveness and moldability points of view, among others. Although laminates made of these resins may be used, single layers are preferred from the recycling viewpoint.

In the practice of the invention, the thickness of the main body is not particularly restricted but preferably is 1-7 mm.

The main body mentioned above can be produced, for example, by joining of parts obtained by blow molding or injection forming, by joining of parts obtained by sheet processing, or by other methods known in the art.

The fuel tank of the invention can be manufactured, for example, by a process comprising (1) the step of preparing the fuel reservoir in advance by such a method as mentioned above and (2) the step of placing the fuel reservoir in the main body on the occasion of forming the main body.

Owing to its excellent chemical resistance, the fuel tank of the invention can also be suitably used as a tank for an aqueous solution of urea in a system in which diesel engine exhaust gas is sprayed with the aqueous solution of urea to reduce the $NO_x$ level. Further, it can be used, for example, as a tank, bottle or reservoir in the industry in general and in semiconductor manufacturing, where chemical resistance and nonstickiness are required.

EFFECTS OF THE INVENTION

The laminate of the invention, which has the constitution described hereinabove, is excellent in moldability, chemical resistance and low fuel permeability as well as in recyclability.

BEST MODES FOR CARRYING OUT THE INVENTION

The following examples illustrate the present invention in further detail. These examples are, however, by no means limitative of the scope of the invention.

In the examples, inclusive of the comparative example, various measurements were carried out by the methods described below.

Fluororesin monomer composition

Measurements were made using a $^{19}$F-NMR spectrometer (product of Bruker BioSpin, model AC300).

Resin melting point

The melting point was determined as the temperature corresponding to the maximum value on a heat-of-fusion curve recorded using a DSC apparatus (product of Seiko) at a programming rate of 10°C/minute.

MFR

A melt indexer (product of Toyo Seiki Seisakusho) was used and the weight (g) of each polymer flowing out through a nozzle having a diameter of 2 mm and a length of 8 mm per unit time (10 minutes) at each measurement temperature and under a load of 5 kg was measured.

Number of carbonate groups

Each copolymer in the form of a white powder or cut pieces of melt-extruded pellets was compression-molded at room temperature to give a film with a thickness of 50 to 200 $\mu$m. This film was subjected to infrared absorption spectrometry and the absorbance of the $\nu$(C=O) peak due to the carbonyl group of the carbonate group [-OC(=O)O-] as appearing at an absorption wavelength in the range of 1810 to 1815 cm$^{-1}$ [$\nu$(C=O)] was measured, and the number N of carbonate groups per $10^6$ main chain carbon atoms in the copolymer was calculated according to the formula (a) given below.

$$N = 500AW/\varepsilon df \qquad (a)$$

A: Absorbance of carbonate group [-OC(=O)O-]-due $\nu$(C=O) peak
$\varepsilon$: Molar extinction coefficient of carbonate group [-OC(=O)O-] due $\nu$(C=O) peak; $\varepsilon$ was regarded as being $\varepsilon$ = 170 (1·cm$^{-1}$·mol$^{-1}$) based on model compound data.
W: Average monomer molecular weight calculated from the copolymer composition
d: Film density (g/cm$^3$)
f: Film thickness (mm)

In the infrared absorption spectrometry, scanning was carried out 40 times using a Perkin-Elmer model 1760X FT-IR spectrometer (product of Perkin-Elmer). The IR spectrum obtained was subjected to automatic baseline judgment using Perkin-Elmer Spectrum for Windows Ver. 1.4C for the measurement of the absorbance of the peak at 1810 to 1815 cm$^{-1}$. The film thickness was measured using a micrometer.

Material fuel permeability coefficient measurement

Each of the copolymers, each in pellet form, for use as the respective layers of a tubular laminate was placed in a mold with a diameter of 120 mm, the whole was set on a press heated to a temperature not lower than the melting point, and the copolymer pellets were melted and pressed at a pressure of about 2.9 MPa to give a 0.15-mm-thick sheet. A SUS316 stainless steel cup for permeability coefficient measurement, 40 mm ø in inside diameter and 20 mm in height, containing 18 ml of CE10 or CE85 was covered with the sheet obtained, and the changes in mass at 60°C were measured over 1000 hours. The fuel permeability coefficient (g·mm/m$^2$/day) was calculated based on the hourly change in mass, the surface area of the sheet portion in contact with the liquid and the sheet thickness.

Rate of fuel permeation through the bag

Each bag was filled with CE10 or CE85, the changes in mass at 60°C were measured, and the mass of the fuel permeating per unit day and per unit inside surface area was calculated.

Tensile strength

Measurements were made according to ASTM D 1708. Microdumbbell test specimens were pulled on a Tensilon tester (product of Orientec) at room temperature at a rate of pulling of 100 mm/minute, and the maximum point strength was measured.

In the examples and comparative example, the following resins were used.

Fluororesin A (CTFE-based copolymer)

Method of synthesis

A jacketed polymerization vessel equipped with a stirrer and capable of containing 175 kg of water was charged with 50 kg of demineralized pure water, the inside space was replaced with pure nitrogen gas to a sufficient extent, and the nitrogen gas was then removed by evacuation. Then, 40.5 kg of octafluorocyclobutane, 2.4 kg of chlorotrifluoroethylene [CTFE], 6.5 kg of tetrafluoroethylene [TFE] and 4.5 kg of perfluoro(propyl vinyl ether) [PPVE] were fed under pressure into the vessel, the temperature was adjusted to 35°C, and stirring was started. Thereto was added 0.2 kg of a 50% (by mass) methanol solution of di-n-propyl peroxydicarbonate [NPP] as a polymerization initiator to initiate the polymerization. During polymerization, a monomer mixture prepared which had the same composition as the desired copolymer composition was additionally fed so that the vessel inside pressure might be maintained at 0.8 MPa; after such polymerization, the gaseous phase remaining in the vessel was discharged, and the polymer formed was taken out, washed with demineralized pure water and dried, whereby 19 kg of a granular powdery CTFE copolymer was obtained. The copolymer was then melted and kneaded using a ø 50 mm short-screw extruder at a cylinder temperature of 280°C and pelletized. Then, the CTFE copolymer obtained in the form of pellets was heated at 180°C for 24 hours.

The pellets obtained had the following composition and physical properties.

CTFE/TFE/PPVE: 34.5/63.4/2.1 (mole percent)
Melting point: 230°C
MFR: 18 g/10 minutes (297°C, load 5 kg)
Functional groups: carbonate groups (number of carbonate groups per $10^6$ main chain carbon atoms: 100)
Fuel permeability coefficient: 0.3 g·mm/m$^2$/day (CE10)

Fluororesin B (FEP-based copolymer)

A FEP species (product of Daikin Industries, trade name: Neoflon FEP NP-101) having the following physical properties was used.
Melting point: 255°C
MFR: 23 g/10 minutes (372°C, load 5 kg)
Fuel permeability coefficient: 0.3 g·mm/m$^2$/day (CE10)

Thermoplastic resin

Polyamide 12: Product of Daicel Degussa, trade name: Vestamid X7297
Modified polyethylene resin [modified PE]: Product of Mitsui Chemicals, trade name: Adomer HB030
High-density polyethylene resin [HDPE] : Product of Japan Polyolefin, trade name: HJ451
Polyamide 6: Product of Ube Industries, trade name: Ube Nylon 1030

Reference Example 1 (not according to the invention)

Using a coat-hanger die, a 250-μm-thick fluororesin A film (film width 650 mm) was produced by extrusion (die temperature 310°C), the film was folded back and closed on three sides by heat sealing, the bag obtained was filled with CE10 or CE85 and then closed on the fourth side by heat sealing; the bag with the fuel sealed therein was placed in an explosion-proof oven in an atmosphere of 60°C, and the changes in weight were measured at regular intervals. After 2000 hours of sealing, the fuel was discharged. Further, ASTM microdumbbells were punched out of the bag after fuel sealing and subjected, together with ASTM microdumbbells punched out of the film before contact with the fuel, to comparative tensile strength and elongation measurements.

The rates of fuel permeation through the bag wall after contact with the fuel were 1.2 g/m$^2$/day (CE10) and 0.6 g/m$^2$/day (CE85). The tensile strength and elongation were maintained at levels not lower than 75%.

Reference Example 2 (not according to the invention)

Using a coat-hanger die, a 250-$\mu$m-thick fluororesin B film (film width 650 mm) was produced by extrusion (die temperature 330°C), the film was folded back and closed on three sides by heat sealing, the bag obtained was filled with CE85 and then closed on the fourth side by heat sealing; the bag with the fuel sealed therein was placed in an explosion-proof oven in an atmosphere of 60 °C, and the changes in weight were measured at regular intervals. After 2000 hours of sealing, the fuel was discharged. Further, ASTM microdumbbells were punched out of the bag after fuel sealing and subjected, together with ASTM microdumbbells punched out of the film before contact with the fuel, to comparative tensile strength and elongation measurements. The rate of fuel permeation through the bag wall after contact with the fuel was 0.3 g/m$^2$/day. The tensile strength and elongation were maintained at levels not lower than 75%.

Example 1

Using coat-hanger dies, a fluororesin A (layer thickness 200 $\mu$m)/polyamide 12 (layer thickness 100 $\mu$m) film (width 400 mm) was produced by coextrusion (die temperature 290°C), the film was folded back, with the fluororesin layer inside, and closed on three sides by heat sealing, the bag obtained was filled with CE10 and then closed on the fourth side by heat sealing; the bag with the fuel sealed therein was placed in an explosion-proof oven in an atmosphere of 60°C, and the changes in weight were measured at regular intervals. After 2000 hours of sealing, the fuel was discharged. Further, ASTM microdumbbells were punched out of the bag after fuel sealing and subjected, together with ASTM microdumbbells punched out of the film before contact with the fuel, to comparative tensile strength and elongation measurements. The rate of fuel permeation through the bag wall after contact with the fuel was 1.6 g/m$^2$/day. The tensile strength and elongation were maintained at levels not lower than 75%.

Example 2

A fluororesin A (layer thickness 200 $\mu$m)/polyamide 12 (layer thickness 50 $\mu$m)/modified PE (layer thickness 60 $\mu$m)/HDPE (layer thickness 100 $\mu$m) inflated film (bag width 200 mm) was produced, with the fluororesin layer inside, by multilayer inflation molding (die temperature 280°C). The bag was closed on two sides by heat sealing, the bag was then filled with CE10, and the opening was closed by heat sealing. The bag with the fuel sealed therein was placed in an explosion-proof oven in an atmosphere of 60°C, and the changes in weight were measured at regular intervals. After 2000 hours of sealing, the fuel was discharged. Further, ASTM microdumbbells were punched out of the bag after fuel sealing and subjected, together with ASTM microdumbbells punched out of the film before contact with the fuel, to comparative tensile strength and elongation measurements. The rate of fuel permeation after contact with the fuel was 1.5 g/m$^2$/day. The tensile strength and elongation were maintained at levels not lower than 75%.

Example 3

Using coat-hanger dies, a fluororesin A (layer thickness 200 $\mu$m) /polyamide 12 (layer thickness 50 $\mu$m) /modified PE (layer thickness 60 $\mu$m)/HDPE (layer thickness 100 $\mu$m) film (width 400 mm) was produced by coextrusion (die temperature 280°C), the film was folded back, with the fluororesin layer inside, and closed on three sides by heat sealing, the bag obtained was filled with CE85 and then closed on the fourth side by heat sealing; the bag with the fuel sealed therein was placed in an explosion-proof oven in an atmosphere of 60°C, and the changes in weight were measured at regular intervals. After 2000 hours of sealing, the fuel was discharged. Further, ASTM microdumbbells were punched out of the bag after fuel sealing and subjected, together with ASTM microdumbbells punched out of the film before contact with the fuel, to comparative tensile strength and elongation measurements. The rate of fuel permeation through the bag wall after contact with the fuel was 0.5 g/m$^2$/day. The tensile strength and elongation were maintained at levels not lower than 75%.

Comparative Example 1

Using a coat-hanger die, a 250-$\mu$m-thick polyamide 6 film was produced by extrusion (die temperature 250°C), a bag was made of the same, filled with CE10 and closed by heat sealing, and the bag with the fuel sealed therein was placed in an explosion-proof oven in an atmosphere of 60°C, and the changes in weight were measured at regular intervals. After 2000 hours of sealing, the fuel was discharged. Further, ASTM microdumbbells were punched out of the bag after fuel sealing and subjected, together with ASTM microdumbbells punched out of the film before contact with the fuel, to comparative tensile strength and elongation measurements. The rate of fuel permeation through the bag wall after contact with the fuel was 100 g/m$^2$/day. The tensile strength and elongation were maintained at levels not higher than 75%.

As the above data indicate, the fuel reservoirs comprising a fluororesin layer are excellent in low fuel permeability and chemical resistance against alcohol-containing fuels.

INDUSTRIAL APPLICABILITY

The fuel tank of the invention can be suitably used as a liquid fuel tank for gasoline or alcohol, which is used, for example, on an automobile, motorcycle, boat or airplane, and can also be used as a tank, bottle or reservoir for chemicals in, for example, a factory.

**Claims**

1. A fuel tank comprising a main body and, placed within the main body and capable of changing the internal volume according to the volume of the fuel, a bag-like fuel reservoir having a multilayer structure comprising

   (i) a polyolefin resin/modified polyolefin resin/fluororesin (outer surface layer/intermediate layer/inner surface layer) structure,
   (ii) a polyolefin resin/modified polyolefin resin/polyamide resin/fluororesin (outermost surface layer/outer layer/inner layer/innermost surface layer) structure, or
   (iii) a polyamide resin/fluororesin (outer surface layer/inner surface layer) structure,

   wherein the fluororesin contains an adhesive functional group selected from an amide, carbamoyl, hydroxyl, carboxyl, carbonate and carboxylic acid halide group.

2. The fuel tank of Claim 1, wherein the fluororesin is a perhalopolymer.

3. The fuel tank of Claim 1 or 2, wherein the fluororesin is a chlorotrifluoroethylene [CTFE]-based copolymer or a tetrafluoroethylene/hexafluoropropylene [FEP]-based copolymer.

4. The fuel tank of any of Claims 1-3, wherein the main body comprises a plastic.

**Patentansprüche**

1. Treibstofftank, der einen Hauptkörper und, in dem Hauptkörper positioniert und fähig das innere Volumen gemäß dem Volumen des Treibstoffes anzupassen, ein sackartiges Treibstoffreservoir umfasst, das eine Multischichtstruktur aufweist, die folgendes umfasst:

   (i) eine Polyolefinharz/modifizierte Polyolefinharz/Fluorharz-Struktur (äußere Oberflächenschicht/Zwischenschicht/innere Oberflächenschicht)
   (ii) eine Polyolefinharz/modifizierte Polyolefinharz/Polyamidharz/Fluorharz-Struktur (äußerste Oberflächenschicht/äußere Schicht/innere Schicht/innerste Oberflächenschicht), oder
   (iii) eine Polyamidharz/Fluorharz-Struktur (äußere Oberflächenschicht/innere Oberflächenschicht),

   wobei das Fluorharz eine adhäsive funktionelle Gruppe enthält, die aus einer Amid-, Carbamoyl-, Hydroxyl-, Carboxyl-, Carbonat- und Carboxylsäurehalogenidgruppe ausgewählt ist.

2. Treibstofftank nach Anspruch 1, wobei das Fluorharz ein Perhalopolymer ist.

3. Treibstofftank nach Anspruch 1 oder 2, wobei das Fluorharz ein Chlortrifluorethylen(CTFE)-basiertes Copolymer oder ein Tetrafluorethylen/ Hexafluorpropylen(FEP)-basiertes Copolymer ist.

4. Treibstofftank nach einem der Ansprüche 1-3, wobei der Hauptkörper einen Kunststoff umfasst.

**Revendications**

1. Cuve de carburant comprenant un corps principal et, situé à l'intérieur du corps principal et capable de changer le volume interne selon le volume de carburant, un réservoir de carburant de type poche disposant d'une structure multicouche comprenant :

(i) une structure de résine polyoléfine / résine polyoléfine modifiée / fluororésine (couche de surface extérieure / couche intermédiaire / couche de surface intérieure),
(ii) une structure de résine polyoléfine / résine polyoléfine modifiée / résine polyamide / fluororésine (couche de surface extérieure / couche intermédiaire / couche de surface intérieure), ou
(iii) une structure de résine polyamide/fluororésine (couche de surface extérieure / couche de surface intérieure),

dans laquelle la fluororésine contient un groupe fonctionnel adhésif choisi parmi un groupe amide, carbamoyle, hydroxyle, carboxyle, carbonate et halogénure d'acide carboxylique.

2. Cuve de carburant selon la revendication 1, dans laquelle la fluororésine est un polymère presque entièrement halogéné.

3. Cuve de carburant selon la revendication 1 ou 2, dans laquelle la fluororésine est un copolymère à base de chlorotrifluoroéthylène [CTFE] ou un copolymère à base de tétrafluoroéthylène / hexafluoroéthylène [FEP].

4. Cuve de carburant selon l'une quelconque des revendications 1 à 3, dans laquelle le corps principal comprend un plastique.

**EP 2 067 647 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0664094 A
- JP 2000229522 A
- US 5928745 A
- WO 2005100420 A
- WO 9945044 A
- JP H03174018 A